# EUROPEAN PATENT APPLICATION

(11) **EP 1 661 853 A1**
(43) Date of publication of application: **31.05.2006**
(21) Application number: 04747881.3
(22) Date of filing: 23.07.2004
(51) Int. Cl.: C01B 3/36, C01B 3/38, H01M 8/06

(54) **METHOD AND APPARATUS FOR TREATING REFORMED GAS AND FUEL CELL ELECTRIC POWER GENERATION SYSTEM**

(30) Priority: 28.07.2003 JP 2003280618
(71) Applicant: EBARA BALLARD CORPORATION, Tokyo 144-0042 (JP)
(72) Inventor: TAKAGI, Yuto, Ebara Ballard Corporation, Ohta-ku, Tokyo 1440042 (JP)
(74) Representative: HOFFMANN EITLE
(86) International application number: PCT/JP2004/010495
(87) International publication number: WO 2005/009895

(57) **Abstract**

To provide a method for treating a reformate in which carbon monoxide in the reformate can be removed in a stable and reliable manner for a long period of time. A method for treating a reformate according comprises a temperature elevating step of heating a selective oxidation catalyst 19 to elevate temperature thereof, the selective oxidation catalyst 19 being for selectively oxidizing carbon monoxide in the reformate 44 with air 34 for selective oxidation; a selective oxidation catalyst 19 activating step of, after the temperature of the selective oxidation catalyst 19 has been elevated in the above temperature elevating step, supplying the reformate 44, formed in a reforming step of forming the reformate 44 from a hydrocarbon fuel 42 by steam reforming reaction, to the selective oxidation catalyst 19 for a predetermined time, without supplying the air 34 for selective oxidation, to activate the selective oxidation catalyst 19; and a carbon monoxide removing step of removing carbon monoxide in the reformate 44, formed in the reforming step, by the selective oxidation thereof with the air 34 for selective oxidation using the activated selective oxidation catalyst 19.

## Description

### Technical Field

This invention relates to a method of treating a reformate in which carbon monoxide in the reformate, which contains hydrogen and which is formed from a hydrocarbon fuel and a water component by the steam reforming reaction, is removed by the selective oxidation thereof, to an apparatus for treating a reformate, and to a fuel cell electric power generating system having the apparatus for treating a reformate.

### Background Art

In a fuel cell electric power generating system, a reformate containing a large amount of hydrogen is utilized as a fuel. The reformate is generally obtained by the steam reforming reaction of a hydrocarbon fuel with a water component. The reformate formed by the steam reforming reaction contains several % of carbon monoxide which poisons an electrode catalyst of a fuel cell. Therefore, it is necessary to reduce the concentration of carbon monoxide in the reformate before it is fed to the fuel cell.

Among the fuel cells, a proton-exchange membrane fuel cell is particularly promising for sale on the market such as for a power source of automobiles and for domestic uses (supply of high temperature heat) because the start-up time is reduced due to its low operation temperature of as low as below 100 °C and because the material costs can be suppressed to a low level. However, since the operation temperature of the proton-exchange membrane fuel cell is low as described above, the activity of the electrode catalyst is low and the catalyst is poisoned by carbon monoxide in the reformate. Therefore, it is necessary to reduce the carbon monoxide concentration in the reformate to several 10 ppm or less.

The reformate obtained from a hydrocarbon fuel by the steam reforming reaction using a reforming catalyst contains several % of carbon monoxide. As a consequence, a transforming reaction using a transformation catalyst is often conducted after the steam reforming reaction. In this manner, the carbon monoxide concentration in the reformate may be reduced to several thousands ppm. Even with this method, however, the carbon monoxide concentration is still high in the case of the solid polymer type fuel cell. Thus, a carbon monoxide removing apparatus having a selective oxidation catalyst is disposed downstream of the transformation catalyst to perform selective oxidation reaction of carbon monoxide with oxygen in air. By this method, the carbon monoxide concentration in the reformate may be reduced to several tens ppm or less.

### Disclosure of the Invention

### Problems to be Solved by the Invention

However, in a fuel cell system which is provided with a fuel cell and which uses a Ru-based or Pt-based catalyst as a selective oxidation catalyst, when air for selective oxidation is supplied to the fuel cell simultaneously with the supply of a reformate at the time of start of the system, the carbon monoxide concentration in the reformate gradually increases during continuous operation beyond several hours so that the electrode catalyst of the fuel cell is occasionally poisoned. Thus, there is a problem in reliability of the fuel cell system. In the course of the commercialization for, for example, automobiles or domestic uses, the reliance and stability for a long term are highly desired in the fuel cell system.

Thus, it is an object of the present invention to provide a method of treating a reformate which can remove carbon monoxide in the reformate for a long period of time in a stable and reliable manner, to provide an apparatus for treating a reformate, and to provide a fuel cell electric power generating system having such an apparatus for treating a reformate.

### Means for Solving the Problem

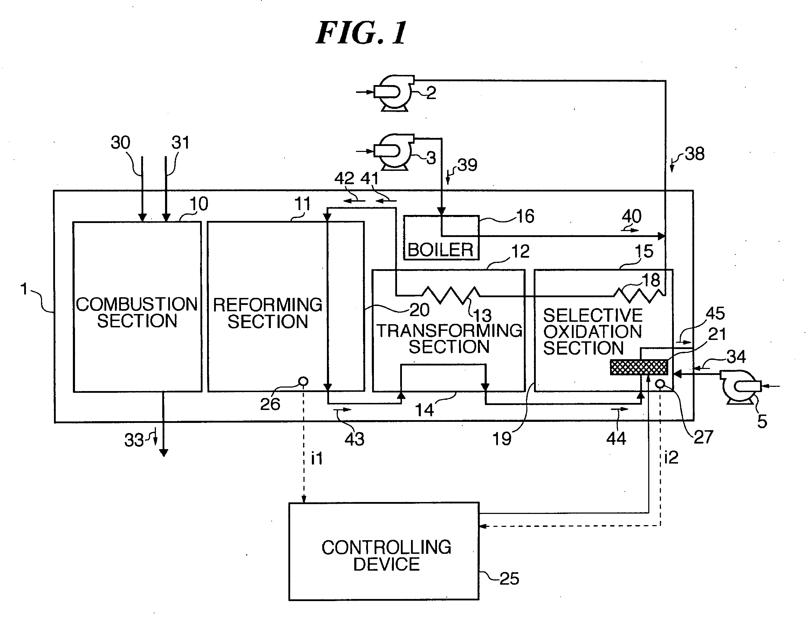

In order to achieve the above object, a method for treating a reformate according to claim 1 comprises, as shown in FIG. 1 for example, a temperature elevating step of heating a selective oxidation catalyst 19 to elevate temperature thereof, the selective oxidation catalyst 19 being for selectively oxidizing carbon monoxide in the reformate 44 with air 34 for selective oxidation; a selective oxidation catalyst activating step of, after the temperature of the selective oxidation catalyst 19 has been elevated in the temperature elevating step, supplying the reformate 44, formed in a reforming step of forming the reformate 43 from a hydrocarbon fuel 42 by steam reforming reaction, to the selective oxidation catalyst 19 for a predetermined time, without supplying the air 34 for selective oxidation, to activate the selective oxidation catalyst 19; and a carbon monoxide removing step of removing carbon monoxide in the reformate 44, formed in the reforming step, by the selective oxidation thereof with the air 34 for selective oxidation using the activated selective oxidation catalyst 19.

In the above construction which has the temperature elevating step, the selective oxidation catalyst activating step, and the carbon monoxide removing step, temperature of the selective oxidation catalyst 19 is elevated, without supplying the air 34 for selective oxidation, so as to allow the reduction reaction of the selective oxidation catalyst 19 to easily take place. The reformate 44 is supplied for a predetermined period of time to reduce the selective oxidation catalyst 19 with hydrogen so that the catalyst is activated. Using the activated selective oxidation catalyst 19, carbon monoxide in the reformate 44 is selectively oxidized and removed therefrom. Therefore, carbon monoxide in the reformate 44 can be removed in a stable and reliable manner for a long period of time.

In a method of treating a reformate according to claim 2, as recited in claim 1, as shown in FIG. 1 for example, the heating in the temperature elevating step is carried out using a heat generated by an electric heater 21.

In the above construction in which the temperature elevating step is carried out using a heat generated by an electric heater 21, the temperature of the selective oxidation catalyst 19 can be elevated in a reliable manner by supplying an electric power to the electric heater 21 without being influenced by conditions in other steps.

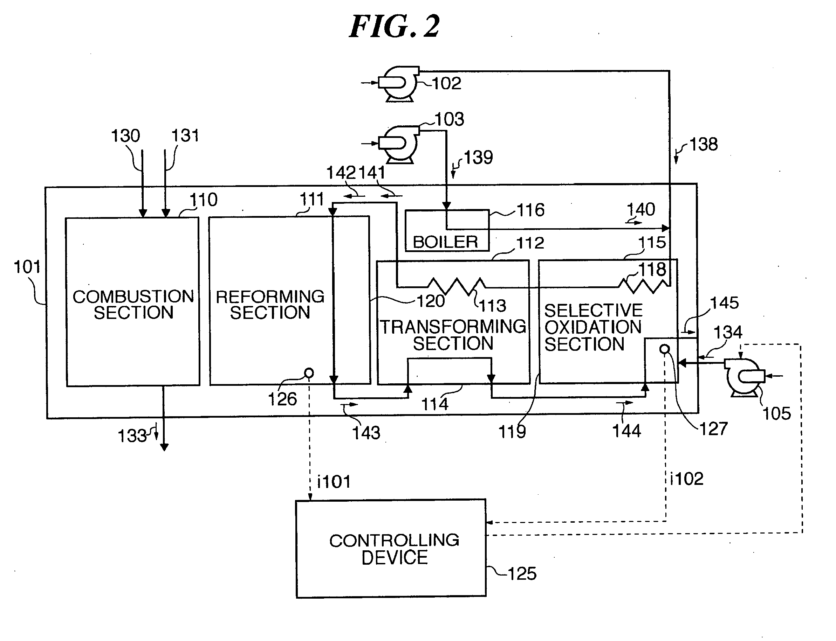

In a method of treating a reformate according to claim 3, as recited in claim 1 or claim 2, as shown in FIG. 2 for example, the heating in the temperature elevating step is carried out using a heat of oxidation generated by oxidation of combustible gas components in the reformate 144, formed in the reforming step, by the air 134 for selective oxidation using the selective oxidation catalyst 119.

Since the carbon monoxide removing step, in which carbon monoxide in the reformate 144 is oxidized, accompanies the oxidation of combustible gas components in the reformate 144 by the air 134 for selective oxidation using the selective oxidation catalyst 119, the heat of oxidation is utilized for heating without waste and, therefore, the heating is carried out efficiently. Thus, the treatment process can be simplified because it is not necessary to add a heating step.

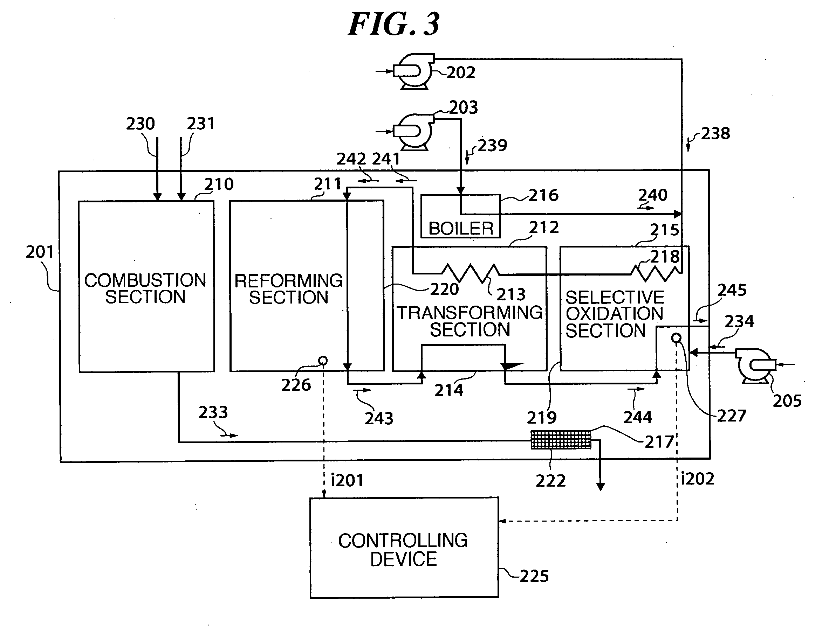

In a method of treating a reformate according to claim 4, as recited in any one of claim 1 to claim 3, as shown in FIG. 3 for example, the heating in the temperature elevating step is carried out using a heat of combustion generated in a combustion step of combusting a combustion fuel 230 using a combustion catalyst 222.

Since the heating in the temperature elevating step is typically carried out by appropriation of a large amount of heat of combustion which is mainly utilized for heating the reforming catalyst 220 used for the formation of the reformate 243, the heating may be performed within a short period of time.

In order to achieve the above object, an apparatus 1 for treating a reformate according to claim 5, as shown in FIG. 1 for example, comprises: carbon monoxide removing means 15, filled with a selective oxidation catalyst 19, for removing carbon monoxide in the reformate 44, formed in reforming means 11 for forming the reformate 43 from a hydrocarbon fuel 38 by the steam reforming reaction, by selective oxidation thereof with air 34 for selective oxidation; temperature elevating means 21 for elevating temperature of the selective oxidation catalyst 19; and control means 25 for performing a control such that the temperature of the selective oxidation catalyst 19 is elevated by the temperature elevating means 21, that the reformate 44 is supplied in a predetermined amount to the selective oxidation catalyst 19, whose temperature has been elevated, without supplying the air 34 for selective oxidation, and that, after the reformate 44 has been supplied in the predetermined amount, supply of the air 34 for selective oxidation to the selective oxidation catalyst 19 is started.

In the above construction which includes the carbon monoxide removing means 15, the temperature elevating means 21, and the control means 25, control can be made so that the temperature of the selective oxidation catalyst 19 filled in the carbon monoxide removing means 15 is elevated by the temperature elevating means 21. To the thus temperature-elevated selective oxidation catalyst 19, a reformate 44 is supplied in a predetermined amount without supplying the air 34 for selective oxidation thereto. After the supply of the predetermined amount has been completed, the supply of the air 34 for selective oxidation to the selective oxidation catalyst 19 is started. Thus, the selective oxidation catalyst 19 can be activated by the hydrogen reduction with the reformate 44 to enable the removal of carbon monoxide in the reformate 44 by selective oxidation thereof. Accordingly, the removal of carbon monoxide in the reformate 44 can be carried out in a stable and reliable manner for a long period of time.

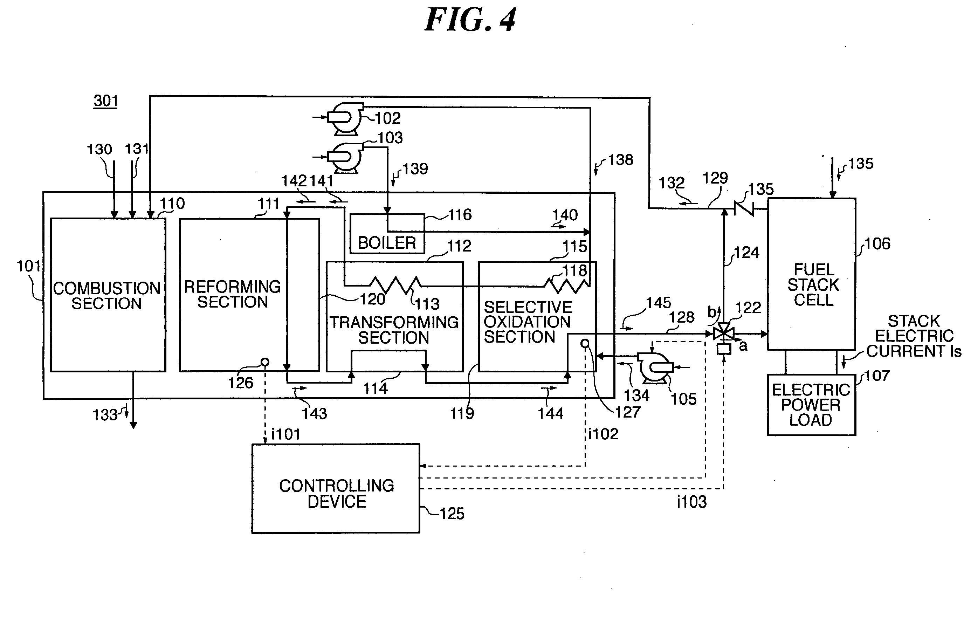

In order to achieve the above object, a fuel cell electric power generating system 301 according to claim 6, as shown in FIG. 4 for example, comprises: the reforming means 111; the apparatus 101 for treating a reformate 145 as recited in claim 5; and a fuel cell 106 for generating an electric power by electrochemical reaction of the reformate 145, from which carbon monoxide has been removed, with an oxidizing agent gas 135.

In the above construction, there can be provided a fuel cell electric power generating system 301 in which the apparatus 101 for treating a reformate can supply the reformate 145, from which carbon monoxide has been removed and which has a low content of carbon monoxide, in a stable manner for a long period of time. Thus, the fuel cell 106 can supply an electric power in a stable manner for a long period of time.

### Effect of the Invention

Since the temperature elevating step, the selective oxidation catalyst activating step, and the carbon monoxide removing step are provided, the temperature of the selective oxidation catalyst is elevated, without supplying the air for selective oxidation, so as to allow the reduction reaction of the selective oxidation catalyst to easily take place. The reformate is supplied for a predetermined period of time to reduce the selective oxidation catalyst with hydrogen so that the catalyst is activated. Using the activated selective oxidation catalyst, carbon monoxide in the reformate is selectively oxidized and removed therefrom. Therefore, carbon monoxide in the reformate can be removed in a stable and reliable manner for a long period of time.

The present application is based on the Japanese Patent Application No. 2003-280618 filed on July 28, 2003. This Japanese Patent Application is hereby incorporated in its entirety by reference into the present application.
The present application will become more fully understood from the detailed description given hereinbelow. However, the detailed description and the specific embodiment are illustrated of desired embodiments of the present invention and are described only for the purpose of explanation. Various changes and modifications will be apparent to those ordinary skilled in the art of the basic of the detailed description.
The applicant has no intention to give to public any disclosed embodiment. Among the disclosed changes and modifications, those which may not literally fall within the scope of the patent claims constitute, therefore, a part of the present invention in the sense of doctrine of equivalents.

### Preferred Embodiment for Carrying Out the Invention

Embodiments of the present invention will be described below with reference to the drawings. In each of the Figures, the same reference numerals designate the similar or corresponding parts and overlapped description will be omitted.

FIG. 1 is a block diagram illustrating the construction of a fuel treating apparatus 1, as an apparatus for treating a reformate, according to a first embodiment of the present invention. The fuel treating apparatus 1 includes a fuel gas feeding blower 2, a pump 3 for supplying process water for reforming, an air feeding blower 5 for selective oxidation, a reforming section 11 as reforming means, filled with a reforming catalyst 20, a transforming section 12 filled with a transformation catalyst 14, a selective oxidation section 15 as carbon monoxide removing means, filled with a selective oxidation catalyst 19, a combustion section 10, a boiler 16, a selective oxidation section heater 21 as temperature elevating means or an electric heater, a reforming section temperature detector 26, a selective oxidation section temperature detector 27, and a controlling device 25 as controlling means. A flow passage 13 extends within the transforming section 12 for heating a fuel gas 38 passing through the transformation catalyst 14 before being fed to the reforming section 11 without contact with the transformation catalyst 14. Also, a flow passage 18 extends within the selective oxidation section 15 for heating the fuel gas 38 passing through the selective oxidation catalyst 19 before being fed to the reforming section 11 without contact with the selective oxidation catalyst 19.

The fuel gas feeding blower 2 feeds the fuel gas 38 as a hydrocarbon fuel to the reforming section 11 through the flow passage 18 and the flow passage 13. The pump 3 for supplying process water for reforming supplies process water 39 for reforming to the flow passage 18, disposed with the selective oxidation section 15, through the boiler 16. The air feeding blower 5 for selective oxidation feeds the air 34 for selective oxidation to the selective oxidation catalyst 19 contained in the selective oxidation section 15. The selective oxidation catalyst 19 is typically a supported catalyst containing, as a catalyst, a noble metal such as Pt or Ru supported on a carrier such as alumina.

In the reforming section 11, the reformate 43 is produced by a steam reforming reaction (for example, CH₄ + H₂O → 3H₂ + CO) of the fuel gas 42 as a reforming fuel supplied to the reforming section 11 through the flow passage 18 and the flow passage 13 with the process water 41 for reforming using the reforming catalyst 20. In the transforming section 12, carbon monoxide in the reformate 43 supplied to the transforming section 12 is removed by a transforming reaction (CO + H₂O → CO₂ + H₂) of the carbon monoxide with the process water 41 for reforming which remains present in the reformate 43 using the transformation catalyst 14. In the selective oxidation section 15, carbon monoxide remaining in the reformate 44 supplied to the selective oxidation section 15 is removed by the selective oxidation reaction (CO+ (1/2) O₂ → CO₂) using the selective oxidation catalyst 19.

In the combustion section 10, a raw material 30 for combustion introduced into the combustion section 10 is combusted using the air 31 for combustion. The combustion section 10 is provided with a combustion burner (not shown) by which the raw material 30 for combustion is combusted.

In the boiler 16, the process water 39 for reforming fed to the boiler 16 is heated and evaporated by the heat supplied from the transforming section 12, the selective oxidation section 15, and the reforming section 11. The evaporated process water 40 for reforming is passed, together with the fuel gas 38, to the reforming section 11 through the flow passage 18 and the flow passage 13.

The selective oxidation section heater 21 is wound around the outer periphery of the selective oxidation section 15 and is disposed in the fuel treatment apparatus 1. The selective oxidation section heater 21 is supplied with an electric power from the controlling device 25 to generate a heat by which the selective oxidation catalyst 19 in the selective oxidation section 15 is heated so that the temperature of the selective oxidation catalyst 19 is elevated.

The reforming section temperature detector 26 measures the temperature of the reforming catalyst 20 in the reforming section 11 and outputs a temperature signal i1 to the controlling device 25. The selective oxidation section temperature detector 27 measures the temperature of the selective oxidation catalyst 19 in the selective oxidation section 15 and outputs a temperature signal i2 to the controlling device 25.

The controlling device 25 receives the temperature signal i1 from the reforming section temperature detector 26 and the temperature signal i2 from the selective oxidation section temperature detector 27. The controlling device 25 conducts the control of the entire fuel treatment device 1 and is adapted to control, for example, the supply of the fuel gas 38, process water 39 for reforming, the air 34 for selective oxidation, raw material 30 for combustion, and the air 31 for combustion.

Next, the description will be made of the method for treating the reformate according to the above first embodiment in the normal operation stage using the controlling device 25. The fuel gas 38 as the raw material to be reformed is fed to the reforming section 11 of the fuel treatment apparatus 1 by the fuel gas feeding blower 2, while the process water 39 for reforming is fed thereto by the pump 3 for supplying the process water for reforming. The process water 39 for reforming is heated by the boiler 16 to form the evaporated process water 40 for reforming. The heating of the process water 39 for reforming in the boiler 16 is performed by the transfer of the heat of the selective oxidation reaction (exothermic reaction) from the selective oxidation section 15 as well as by the transfer of the heat of the transforming reaction (exothermic reaction) from the transforming section 12. As a result of the heating by the boiler 16, the temperature of the process water 39 for reforming increases from the ambient temperature to 80 to 100°C.

The evaporated process water 40 for reforming is mixed with the fuel gas 38 and the mixture is fed to the reforming section 11 through the flow passage 18 in the selective oxidation section 15 and the flow passage 13 in the transforming section 12. The fuel gas 38 and the evaporated process water 40 for reforming are directly heated in the flow passage 18 by the selective oxidation section 15 and further directly heated in the flow passage 13 by the transforming section 12. The temperature of fuel gas 38 and the evaporated process water 40 for reforming which exit from the flow passage 18 has increased to 100 to 120°C, while the temperature of fuel gas 38 and the evaporated process water 40 for reforming which exit from the flow passage 13 has increased to 200 to 300°C.

The fuel gas 42 exiting from the flow passage 13 and the evaporated process water 41 for reforming which exit from the flow passage 13 are subjected to a steam reforming reaction in the reforming section 11 to form a reformate 43 which is rich in hydrogen. The reformate 43 contains carbon monoxide in an amount of about 10 %. The reformate 43 exiting from the reforming section 11 is introduced into the transforming section 12. In the transforming section 12, carbon monoxide in the reformate 43 is removed by a transforming reaction, so that the concentration of carbon monoxide in the reformate 43 is reduced to about 0.5 to 2 %. The typical composition of the reformate 44 exiting from the transforming section 12 includes 75 % of hydrogen, 21 % of carbon dioxide, 3 % of methane, and 1 % of carbon monoxide, in terms of mol % on the dry base. The reformate 44 existing from the transforming section 12 is introduced into the selective oxidation section 15, carbon monoxide in the reformate 44 is removed by the selective oxidation reaction in the selective oxidation section 15, and the carbon monoxide concentration is reduced to several tens ppm or less. The reformate 45 exiting from the selective oxidation section 15 is supplied from the fuel treating apparatus 1 to a device (not shown in FIG. 1) adapted to utilize the reformate 45.

Next, the description will be made of the method for treating the reformate according to the above first embodiment at the start of the operation using the controlling device 25. The raw material 30 for combustion and the air 31 for combustion are fed to the combustion section 10 and the combustion burner (not shown) is ignited to start the combustion thereof. The temperature of the reforming catalyst 20 in the reforming section 11 detected by the reforming section temperature detector 26 is maintained at 400°C or less. The fuel gas 42 is supplied to the reforming section 11. The control of the temperature of the reforming section 11 is made by stopping the combustion in the combustion section 10 as soon as the temperature has exceeded 400°C. The reason for the control of the temperature of the reforming section 11 at a temperature of 400°C or less is to prevent the fuel gas 42 from being carbonized in the state where no water is present.

After the initiation of the combustion in the combustion section 10, an electric power is supplied to the selective oxidation section heater 21 so that the heater generates a heat for heating the selective oxidation section 15. Thus, the temperature of the selective oxidation section 15 is elevated (temperature elevating step). When the temperature of the selective oxidation section 15 exceeds 100°C, the supply of the process water 39 for reforming is started. The reason for starting the supply after the temperature has exceeded 100°C is to prevent the condensation of the process water 39 for reforming in the fuel treatment apparatus 1. Since the reforming section 11 and transforming section 12 are typically disposed at positions nearer to the combustion section 10 than the selective oxidation section 15 is, there is no fear of occurrence of dew condensation as long as the temperature of the selective oxidation section 15 exceeds 100°C.

After the start of the supply of the process water 39 for reforming, the flow rate of the fuel gas 38 and the flow rate of the raw material 30 for combustion are increased, and the temperature of the reforming section 11 is increased to 650°C. By increasing the temperature of the reforming section 11 to 650°C, it is possible to produce the reformate 44 which is rich in hydrogen. Next, the amount of heat generated by the selective oxidation section heater 21 is controlled so that the temperature of the selective oxidation section 15 measured by the selective oxidation section temperature detector 27 is adjusted to 140°C.

In this state, the hydrogen rich reformate 44 is streamed through the selective oxidation section 15 in an amount of 25 L (predetermined amount) for 10 minutes (predetermined period of time), so that the selective oxidation catalyst 19 is subjected to hydrogen reduction and activated (selective oxidation catalyst activating step). Since the temperature of the selective oxidation catalyst 19 has been raised to 140°C and is within the temperature range of not lower than 120°C and not higher than 200°C, the reduction treatment of the selective oxidation catalyst 19 can be conducted efficiently. Next, the supply of the electric power to the selective oxidation section heater 21 is stopped and the air 34 for selective oxidation is supplied to the selective oxidation section 15 (carbon monoxide removing step). By this, carbon monoxide in the reformate 44 is efficiently selectively oxidized and removed. Therefore, the fuel treatment apparatus 1 can supply the reformate 45 which is small in the carbon monoxide content (the content is several tens ppm or less).

As described in the foregoing, according to the fuel treatment apparatus 1 of the first embodiment, the controlling device 25 performs a control such that the selective oxidation catalyst 19 is heated at the start of the operation to 140°C using the selective oxidation section heater 21 and that the reformate 44 is supplied to the selective oxidation catalyst 19, without feeding the air for selective oxidation, to reduce the selective oxidation catalyst 19, thereby to permit the activation of the selective oxidation catalyst 19.

FIG. 2 is a block diagram illustrating the construction of a fuel treating apparatus 101 according to a second embodiment of the present invention. The same reference numerals plus 100 are used to denote the component parts in the second embodiment which correspond to those in the first embodiment. The following description will be mainly made of the structure different from the fuel treatment apparatus 1 of the first embodiment. Those points which are not described below are the same as those of the fuel treatment apparatus 1 of the first embodiment. The fuel treating apparatus 101 is not provided with the selective oxidation section heater 21 (FIG. 1). Therefore, a controlling device 125 is not configured to supply an electric power to the selective oxidation section heater 21.

A method for treating the reformate according to the second embodiment in the normal operation stage using the controlling device 125 is the same as the method for treating the reformate according to the above first embodiment in the normal operation stage using the controlling device 25.

Next, the description will be made of the method for treating the reformate according to the second embodiment at the start of the operation using the controlling device 125. A raw material 130 for combustion and air 131 for combustion are fed to a combustion section 110 and a combustion burner (not shown) is ignited to start the combustion thereof. Next, a fuel gas 142 is supplied to a reforming section 111. When the temperature of a reforming catalyst 120 in the reforming section 111 detected by a reforming section temperature detector 126 exceeds 400°C, the combustion in the combustion section 110 is stopped, and the temperature of the reforming catalyst 120 is maintained at 400°C or less. The fuel gas 142 fed to the reforming section 111 is heated in the reforming section 111 by the reforming catalyst 120. The heated fuel gas 142 heats a selective oxidation section 115 during its passage through the selective oxidation section 115.

When the temperature of the selective oxidation section 115 exceeds 100°C, the supply of process water 139 for reforming is started. After the start of the supply of the process water 139 for reforming, the flow rate of a fuel gas 138 and the flow rate of the raw material 130 for combustion are increased, and the temperature of the reforming section 111 is increased to 650°C. By increasing the temperature of the reforming section 111, it is possible to produce a reformate 144 which is rich in hydrogen. After the temperature of 650°C has been reached in the reforming section 111, air 134 for selective oxidation is supplied to the selective oxidation section 115 by an air feeding blower 105 for selective oxidation. As a result, a combustion reaction of combustible gas components such as hydrogen in the reformate 144 takes place in the selective oxidation section 115 to increase the temperature of the selective oxidation catalyst 119 (temperature elevating step). In this case, since the selective oxidation catalyst 119 has not yet been subjected to a reduction treatment, the carbon monoxide removing efficiency may be reduced after operation for a long period of time. However, it is possible to elevate the temperature by the combustion reaction of combustible gas components such as hydrogen. When the temperature of the selective oxidation section 115 is elevated to 140°C, the supply of the air 134 for selective oxidation is stopped.

In this state, the hydrogen rich reformate 144 is streamed through the selective oxidation section 115 in an amount of 25 L (predetermined amount) for 10 minutes (predetermined period of time), so that the selective oxidation catalyst 119 is subjected to hydrogen reduction and activated (selective oxidation catalyst activating step). Since the temperature of the selective oxidation catalyst 119 has been raised to 140°C, the reduction treatment of the selective oxidation catalyst 119 can be conducted efficiently. When the temperature of the selective oxidation section 115 decreases to below 120°C during the activation of the selective oxidation catalyst 119, the supply of the air 134 for selective oxidation is again started and continued until the temperature of the selective oxidation section 115 returns to 140°C. When the temperature of the selective oxidation section 115 returns to 140°C, the supply of the air 134 for selective oxidation is stopped and the reduction treatment of the selective oxidation catalyst 119 is restarted. A total of 25 L of the hydrogen rich reformate 144 is streamed without supplying the air 134 for selective oxidation.

Next, the air 134 for selective oxidation is supplied to the selective oxidation section 115 (carbon monoxide removing step). By this, carbon monoxide in the reformate 144 is efficiently selectively oxidized and removed. Therefore, the fuel treatment apparatus 101 can supply the reformate 145 which is small in the carbon monoxide content (the content is several tens ppm or less) .

In the second embodiment, the air feeding blower 105 for selective oxidation serves as temperature elevating means for elevating the temperature of the selective oxidation catalyst 119.

According to the fuel treatment apparatus 101 of the second embodiment, the controlling device 125 performs a control such that the air 134 for selective oxidation is supplied by the air feeding blower 105 for selective oxidation to the selective oxidation section 115 at the start of the operation to combust the combustible gas components such as hydrogen in the reformate 144 in the selective oxidation section 115 and to heat the selective oxidation catalyst 119 to 140°C and that the reformate 144 is supplied to the selective oxidation catalyst 119, without feeding the air 134 for selective oxidation, to reduce the selective oxidation catalyst 119, thereby to permit the activation of the selective oxidation catalyst 119.

FIG. 3 is a block diagram illustrating the construction of a fuel treating apparatus 201 according to a third embodiment of the present invention. The same reference numerals plus 200 are used to denote the component parts in the third embodiment which correspond to those in the first embodiment.

The following description will be mainly made of the structure different from the fuel treatment apparatus 1 of the first embodiment. Those points which are not described below are the same as those of the fuel treatment apparatus 1 of the first embodiment. The fuel treating apparatus 201 is not provided with the selective oxidation section heater 21 (FIG. 1). Therefore, a controlling device 225 is not configured to supply an electric power to the selective oxidation section heater. The fuel treating apparatus 201 is provided with a combustion catalyst section 217, filled with a combustion catalyst 222, connected to a line through which a combustion exhaust gas 233 is discharged from a combustion section 210. The combustion catalyst section 217 is disposed adjacent to a transforming section 212 and a selective oxidation section 215. The combustion catalyst section 217 is capable of combusting hydrogen and a hydrocarbon fuel.

A method for treating the reformate according to the third embodiment in the normal operation stage using the controlling device 225 is the same as the method for treating the reformate according to the above first embodiment in the normal operation stage using the controlling device 25.

Next, the description will be made of the method for treating the reformate according to the third embodiment at the start of the operation using the controlling device 225. A raw material 230 for combustion and air 231 for combustion are fed to the combustion section 210 and a combustion burner (not shown) is ignited to start the combustion thereof. After the start of the combustion in the combustion section 210, a fuel gas 238 is supplied to a reforming section 211. When the temperature of a reforming catalyst 220 in the reforming section 211 detected by a reforming section temperature detector 226 has arrived at 400°C, the combustion in the combustion section 210 is stopped. When the combustion in the combustion section 210 is stopped, however, the feed of the raw material 230 for combustion and the air 231 for combustion to the fuel treatment device 201 is continued. Thus, the raw material 230 for combustion and the air 231 for combustion are passed to the combustion catalyst section 217 to start the combustion in the combustion catalyst section 217.

The temperatures of the transforming section 212 and the selective oxidation section 215 increase by the heat of the combustion generated in the combustion catalyst section 217. When the temperature of the reforming section 211 becomes lower than 300°C, the feed of the raw material 230 for combustion is stopped and the combustion section 210 is purged once by air 231 for combustion. Thereafter, the feed of the raw material 230 for combustion is restarted and the burner (not shown) is again ignited to start the combustion in the combustion section 210. Incidentally, the combustion catalyst section 217 serves as heating means in the present invention.

When the temperature of the selective oxidation section 215 exceeds 100°C, the supply of process water 239 for reforming is started. After the start of the supply of the process water 239 for reforming, the flow rate of the fuel gas 238 and the flow rate of the raw material 230 for combustion are increased, and the temperature of the reforming section 211 is increased to 650°C. By the increase of the temperature of the reforming section 211 to 650°C, it is possible to produce a reformate 244 which is rich in hydrogen. Next, the combustion in the combustion section 210 is stopped and the combustion of combustible components (such as H₂, CH₄ and CO) of a combustible gas is started in the combustion catalyst section 217. As a result of the combustion, the temperature of the selective oxidation catalyst 219 increases (temperature elevating step). When the temperature of the selective oxidation section 215 reaches at 140°C, the feed of the raw material 230 for combustion is stopped and the combustion section 210 is purged once by air for combustion. Thereafter, the feed of the raw material 230 for combustion is restarted and the burner (not shown) is again ignited to start the combustion in the combustion section 210.

In this state, the hydrogen rich reformate 244 is streamed through the selective oxidation section 215 in an amount of 25 L (predetermined amount) for 10 minutes (predetermined period of time), so that the selective oxidation catalyst 219 is subjected to hydrogen reduction and activated (selective oxidation catalyst activating step). Since the temperature of the selective oxidation catalyst 219 has been raised to 140°C, the reduction treatment of the selective oxidation catalyst 219 can be conducted efficiently. When the temperature of the selective oxidation section 215 decreases to below 120°C, the procedure including the commencement of the combustion in the combustion catalyst section 222 by the termination of the combustion in the combustion section 210 and the restarting of the combustion in the combustion section 210 when the temperature of the selective oxidation section 215 reaches at 140°C is repeated to increase the temperature of the selective oxidation section 215 to 140°C. Then, the reduction treatment of the selective oxidation catalyst 219 is continued. When the reduction treatment is over, the air 234 for selective oxidation is supplied to the selective oxidation section 215 (carbon monoxide removing step). By this, carbon monoxide in the reformate 244 is efficiently selectively oxidized and removed. Therefore, the fuel treatment apparatus 201 can supply the reformate 245 which is small in the-carbon monoxide content (the content is several tens ppm or less).

According to the fuel treatment apparatuses 1, 101, and 201 of the first to third embodiments, the temperature of the selective oxidation catalysts 19, 119, and 219 is elevated at the start of the operation to 140°C by heating the selective oxidation catalysts 19, 119, and 219 before introducing the air 34, 134, and 234 for selective oxidation to the selective oxidation section 15, 115, and 215, respectively. The reformates 44, 144 and 244 are then introduced to the selective oxidation section 15, 115, and 215, respectively, to reduce and activate the selective oxidation catalysts 19, 119, and 219. Therefore, when the reformates 45, 145, and 245 produced in the fuel treatment apparatuses 1, 101, and 201 are each fed to a fuel cell stack 106 (see FIG. 4) to generate electric power, it is possible to suppress the concentration of carbon monoxide in each of the reformates 45, 145, and 245 fed to the fuel cell stack 106 to 38 ppm after the lapse of 24 hours from the commencement of the electric power generation. When the reduction activation treatment is not conducted, the concentration of carbon monoxide increases to 90 ppm after the lapse of 4 hours from the commencement of the electric power generation.

A fuel cell electric power generating system 301 according to the fourth embodiment of the present invention will be described with reference to FIG. 4 and, if necessary, also to FIG. 2. The fuel cell electric power generating system 301 includes a fuel treatment apparatus 101 according to the second embodiment, a fuel cell stack 106 as a fuel cell, a reformate feeding line 128, an off-gas feeding line 129, a reformate bypass line 124, a three way solenoid valve 122 as a three way valve, and a check valve 123.

The reformate feeding line 128 is adapted to feed the reformate 145, produced in and supplied from the fuel treatment apparatus 101, to the fuel cell stack 106. The off-gas feeding line 129 is adapted to convey an off-gas 132 discharged from the fuel cell stack 106 to the combustion section 110 of the fuel treatment apparatus 101. The reformate bypass line 124 is adapted to feed the reformate 145 from the reformate feeding line 128 to the off-gas feeding line 129, while bypassing the fuel cell stack 106. The three way solenoid valve 122 is adapted to introduce the reformate 145 from reformate feeding line 128 to the fuel cell stack 106 when it is in the position "a" and to introduce the reformate 145 from the reformate feeding line 128 to the off-gas feeding line 129 while bypassing the fuel cell stack 106, when it is in the position "b". Whether the three way solenoid valve 122 is in the position "a" or in the position "b" is controlled by the controlling device 125.

The three way solenoid valve 122 forms a part connecting the reformate feeding line 128 and the reformate bypass line 124. The check valve 123 is placed in the off-gas feeding line 129 and disposed upstream of a part connecting the off-gas feeding line 129 and the reformate bypass line 124 with respect to the direction of the flow of the off-gas 132. The check valve 123 allows the flow of the off-gas 132 from the fuel cell stack 106 to the combustion section 110 as described hereinafter and prevents the flow from the combustion section 110 to the fuel cell stack 106 as described hereinafter.

The controlling device 125 controls the entire fuel cell electric power generating system 301 and controls the supply of the fuel gas 138, the process water 139 for reforming, the air 134 for selective oxidation and the air 131 for combustion as well as the supply of a stack electric current Is to electric power loads.

The fuel cell stack 106 has a multi-stack structure in which solid polymer membranes (not shown) and separators (not shown) are alternately stacked. The fuel cell stack 106 is adapted to generate an electric power by the electrochemical reaction of the fed reformate 145 and the fed air 135 for stack as an oxidizing gas and to produce the off-gas 132 (unused reformate) . The off-gas 132 here is a superfluous reformate remaining after the hydrogen in the reformate 145 has been utilized for generating the electric power in the fuel cell stack 106. When, for example, 80 % (mol %) of the hydrogen contained in the reformate 145 has been utilized for generating the electric power, the off-gas is a so-called hydrogen rich gas containing the remainder 20 % (mol %) or equivalent amount of hydrogen. The fuel cell stack 106 is electrically connected to an electric power load 107 so that the stack current Is is fed to the electric power load 107.

Next, the description will be made of a method for operating the fuel cell electric power generating system 301 according to the fourth embodiment of the present invention including a method for treating a reformate in the normal operation stage using the controlling device 125. To the reforming section 111 of the fuel treatment apparatus 101, the fuel gas 138 is fed and the process water 139 for reforming is also fed. The boiler 116 heats the process water 139 for reforming to form vaporized process water 140 for reforming.

The fuel gas 138 and the vaporized process water 140 for reforming are mixed and thereafter passed to the reforming section 111 through the flow passage 118 of the selective oxidation section 115 and the flow passage 113 of the transforming section 112. The fuel gas 138 and the vaporized process water 140 for reforming are directly heated in the flow passage 118 by the selective oxidation section 115 and further directly heated in the flow passage 113 by the transforming section 112.

The fuel gas 138 and the evaporated process water 140 for reforming which exit from the flow passage 113 are subjected to a steam reforming reaction in the reforming section 111 to form the reformate 143 which is rich in hydrogen. The reformate 143 exiting from the reforming section 111 is introduced into the transforming section 112. In the transforming section 112, carbon monoxide in the reformate 143 is removed by a transforming reaction, so that the concentration of carbon monoxide in the reformate 143 is reduced. The reformate 114 existing from the transforming section 112 is introduced into the selective oxidation section 115, where carbon monoxide in the reformate 144 is removed by the selective oxidation reaction so that the concentration of carbon monoxide is reduced to below several tens ppm in the selective oxidation section 115.

The reformate existing from the selective oxidation section 115 of the fuel treatment apparatus 101 is fed through the reformate feeding line 128 to the fuel cell stack 106. In this case, the three way solenoid valve 122 is in the position "a". In the fuel cell stack 106, an electric power is generated by the electrochemical reaction of the fed reformate 145 fed and air fed for stack (not shown) and is supplied to the electric power load 107.

The fuel cell stack 106 discharges the off-gas 132. The off-gas 132 is fed through the off-gas feeding line 129 to the combustion section 110 of the fuel treatment apparatus 101. To the combustion section 110, the air 131 for combustion and, if necessary, the raw material 130 for combustion are supplied to perform the combustion. The combustion heat generated in the combustion section 110 is mainly utilized for steam reforming reaction (endothermic reaction) in the reforming section 111.

Next, the description will be made of the method for operating the fuel cell electric power generating system 301 according to the fourth embodiment at the start of the operation including the method for treating the reformate. Before starting the operation, the three way solenoid valve 122 is set in the position "b". Next, the raw material 130 for combustion and the air 131 for combustion are fed to the combustion section 110. The combustion burner (not shown) is ignited to start the combustion. Thereafter, the fuel gas 142 is fed to the reforming section 111. When the temperature of the reforming catalyst 120 in the reforming section 111 exceeds 400°C, the combustion in the combustion section 110 is stopped and the temperature of the reforming catalyst 120 is decreased to 400°C or less. The fuel gas 142 is passed from the reformate feeding line 128 through the three way solenoid valve 122, reformate bypass line 124 and off-gas feeding line 129, while bypassing the fuel cell stack 106, to the combustion section 110 and is combusted in the combustion section 110. The fuel gas 142 supplied to the reforming section 111 is heated by the reforming catalyst 120 in the reforming section 111. The heated fuel gas 142 heats the selective oxidation section 115 during its passage through the selective oxidation section 115.

When the temperature of the selective oxidation section 115 exceeds 100°C, the supply of the process water 139 for reforming is started. Thereafter, the flow rate of the fuel gas 138 and the flow rate of the raw material 130 for combustion are increased, so that the temperature in the reforming section 111 is increased to 650°C. By increasing the temperature of the reforming section 111 to 650°C, it is possible to produce a reformate 144 which is rich in hydrogen. After the temperature of the reforming section 111 has been reached to 650°C, the air 134 for selective oxidation is supplied to the selective oxidation section 115. As a result, a combustion reaction takes place in the selective oxidation section 115 to increase the temperature of the selective oxidation catalyst 119 (temperature elevating step). When the temperature of the selective oxidation section 115 is reached to 140°C, the supply of the air 134 for selective oxidation is stopped.

In this state, the hydrogen rich reformate 144 is streamed through the selective oxidation section 115 in an amount of 25 L for 10 minutes, so that the selective oxidation catalyst 119 is subjected to hydrogen reduction and activated (selective oxidation catalyst activating step). When the temperature of the selective oxidation section 115 decreases to below 120°C during the activation of the selective oxidation catalyst 119, the supply of the air 134 for selective oxidation is again started and continued until the temperature of the selective oxidation catalyst 119 returns to 140°C. When the temperature of the selective oxidation section 115 returns to 140°C, the supply of the air 134 for selective oxidation is stopped. The reduction treatment of the selective oxidation catalyst 119 is restarted and the hydrogen rich reformate 144 is streamed without the feed of the air 134 for selective oxidation. A total of 25 L of the hydrogen rich reformate 144 is streamed for a total of 10 minutes without the feed of the air 134 for selective oxidation.

Next, the air 134 for selective oxidation is supplied to the selective oxidation section 115. Then the three way solenoid valve 122 is shifted to the position "a" and the hydrogen rich reformate 144 is fed to the fuel cell stack 106 to start the generation of the electric power. By this, carbon monoxide in the reformate 144 is efficiently selectively oxidized and removed. Therefore, it is possible to supply the reformate 145 which is small in the carbon monoxide content (the content is several tens ppm or less) to the fuel cell stack 106.

According to the fuel cell electric power generating system 301 of the fourth embodiment, the controlling device 125 performs a control such that the air 134 for selective oxidation is supplied to the selective oxidation section 115 by the air feeding blower 105 for selective oxidation at the start of the operation to combust the combustible gas components such as hydrogen in the reformate 144 in the selective oxidation section 115 and to heat the selective oxidation catalyst 119 to 140°C and that the reformate 144 is supplied to the selective oxidation catalyst 119, without the feed of the air 134 for selective oxidation, to reduce the selective oxidation catalyst 119, thereby to permit the activation of the selective oxidation catalyst 119. Therefore, the reformate which is small in the content of carbon monoxide can be supplied to the fuel cell stack 106 for a long period of time. Therefore the electrode catalyst (not shown) of the fuel cell stack 106 can be prevented from being poisoned with carbon monoxide.

### Brief Description of the Drawings

FIG. 1 is a block diagram showing the construction of a fuel treatment apparatus according to a first embodiment of the present invention.
FIG. 2 is a block diagram showing the construction of a fuel treatment apparatus according to a second embodiment of the present invention.
FIG. 3 is a block diagram showing the construction of a fuel treatment apparatus according to a third embodiment of the present invention.
FIG. 4 is a block diagram showing the construction of a fuel cell electric power generating system according to a fourth embodiment of the present invention.

### Description of Reference Numerals

- 1,101,201: fuel treating apparatus
- 10: combustion section
- 11: reforming section
- 12: transforming section
- 14: transformation catalyst
- 15: selective oxidation section
- 19: selective oxidation catalyst
- 20: reforming catalyst
- 21: selective oxidation section heater
- 25: controlling device
- 34: air for combustion
- 38: fuel gas
- 43,44: reformate
- 106: fuel cell stack
- 135: air for stack
- 145: reformate
- 217: combustion catalyst section
- 222: combustion catalyst
- 301: fuel cell electric power generating system

## Claims

1. A method for treating a reformate, comprising:
a temperature elevating step of heating a selective oxidation catalyst to elevate temperature thereof, said selective oxidation catalyst being for selectively oxidizing carbon monoxide in said reformate with air for selective oxidation;
a selective oxidation catalyst activating step of, after said temperature of said selective oxidation catalyst has been elevated in said temperature elevating step, supplying said reformate, formed in a reforming step of forming said reformate from a hydrocarbon fuel by steam reforming reaction, to said selective oxidation catalyst for a predetermined time, without supplying said air for selective oxidation, to activate said selective oxidation catalyst; and
a carbon monoxide removing step of removing carbon monoxide in said reformate, formed in said reforming step, by said selective oxidation thereof with said air for selective oxidation using said activated selective oxidation catalyst.

2. A method for treating a reformate as recited in claim 1, wherein said heating in said temperature elevating step is carried out using a heat generated by an electric heater.

3. A method for treating a reformate as recited in claim 1 or 2, wherein said heating in said temperature elevating step is carried out using a heat of oxidation generated by oxidation of combustible gas components in said reformate, formed in said reforming step, by said air for selective oxidation using said selective oxidation catalyst.

4. A method for treating a reformate as recited in any one of claims 1 to 3, wherein said heating in said temperature elevating step is carried out using a heat of combustion generated in a combustion step of combusting a combustion fuel using a combustion catalyst.

5. An apparatus for treating a reformate, comprising:
carbon monoxide removing means, filled with a selective oxidation catalyst, for removing carbon monoxide in said reformate, formed in reforming means for forming said reformate from a hydrocarbon fuel by steam reforming reaction, by selective oxidation thereof with air for selective oxidation;
temperature elevating means for elevating temperature of said selective oxidation catalyst; and
control means for performing a control such that said temperature of said selective oxidation catalyst is elevated by said temperature elevating means, that said reformate is supplied in a predetermined amount to said selective oxidation catalyst, whose temperature has been elevated, without supplying said air for selective oxidation, and that, after said reformate has been supplied in said predetermined amount, supply of said air for selective oxidation to said selective oxidation catalyst is started.

6. A fuel cell electric power generating system, comprising:
reforming means as recited in claim 5; said apparatus for treating a reformate as recited in claim 5; and a fuel cell for generating an electric power by electrochemical reaction of said reformate, from which carbon monoxide has been removed, with an oxidizing agent
gas.
